(19) Europäisches Patentamt / European Patent Office / Office européen des brevets

(11) **EP 3 072 019 B1**

(12) **FASCICULE DE BREVET EUROPEEN**

(45) Date de publication et mention
de la délivrance du brevet:
**28.07.2021 Bulletin 2021/30**

(21) Numéro de dépôt: **14800049.0**

(22) Date de dépôt: **19.11.2014**

(51) Int Cl.:
*G05B 23/02* (2006.01)   *G05B 9/03* (2006.01)

(86) Numéro de dépôt international:
**PCT/EP2014/074978**

(87) Numéro de publication internationale:
**WO 2015/075052 (28.05.2015 Gazette 2015/21)**

(54) **SYSTÈME CRITIQUE ET PROCÉDÉ DE SURVEILLANCE ASSOCIÉ**

KRITISCHES SYSTEM UND ZUGEHÖRIGES ÜBERWACHUNGSVERFAHREN

CRITICAL SYSTEM AND ASSOCIATED MONITORING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2013 FR 1302661**

(43) Date de publication de la demande:
**28.09.2016 Bulletin 2016/39**

(73) Titulaire: **THALES
92200 Neuilly sur Seine (FR)**

(72) Inventeurs:
• **BOBRINSKOY, Alexandre**
  **F-33608 Pessac (FR)**
• **GUERINEAU, Olivier**
  **F-33608 Pessac (FR)**
• **CAZAURANG, Franck**
  **F-33850 Leognan (FR)**
• **GATTI, Marc**
  **F-33608 Pessac (FR)**
• **BLUTEAU, Bruno**
  **F-64370 Arthez de Bearn (FR)**

(74) Mandataire: **Lavoix
2, place d'Estienne d'Orves
75441 Paris Cedex 09 (FR)**

(56) Documents cités:
**EP-A2- 2 381 322   US-A1- 2011 066 305**

• **BOBRINSKOY ALEXANDRE ET AL: "Dynamic inversion of a flight critical actuator for fault diagnosis", 2013 IEEE/AIAA 32ND DIGITAL AVIONICS SYSTEMS CONFERENCE (DASC), IEEE, 5 octobre 2013 (2013-10-05), XP032553177, ISSN: 2155-7195, DOI: 10.1109/DASC.2013.6712536 [extrait le 2014-01-14]**
• **A. BOBRINSKOY ET AL: "Model-based fault detection and isolation design for flight-critical actuators in a harsh environment", 2012 IEEE/AIAA 31ST DIGITAL AVIONICS SYSTEMS CONFERENCE (DASC), 1 octobre 2012 (2012-10-01), pages 1-17, XP055135405, DOI: 10.1109/DASC.2012.6383104 ISBN: 978-1-46-731698-9**
• **V.M. Lamine Fadiga: "Modèles et Algorithmes de Détection de Défauts pour Actionneurs Electrohydraustatiques", , 1 janvier 2010 (2010-01-01), pages 1-64, XP055135611, Extrait de l'Internet: URL:https://extranet.ims-bordeaux.fr/External/IMS/ressources/fichiersPagesPerso/franck.cazaurang@laps.ims-bordeaux.fr/Rapport_Master FADIGA_Lamine.pdf [extrait le 2014-08-20]**
• **None**

**Description**

La présente invention concerne un système critique, notamment de vol, du type comportant une voie de commande comportant une unité d'actionnement ayant un comportement non-linéaire, qui est propre à être commandée par application d'une grandeur d'entrée et dont l'état est caractérisé par une grandeur de sortie mesurée par des capteurs adaptés.

L'invention a pour domaine général celui de la sûreté de fonctionnement d'un système critique à bord d'un véhicule.

Le véhicule peut être un aéronef (comme un avion), un véhicule guidé (comme un train), un véhicule automobile (comme une voiture de tourisme), un navire (comme un sous-marin), etc.

Le système critique peut être un moyen de propulsion (tel qu'un moteur électrique synchrone), un moyen de surveillance (tel qu'un capteur électrique de surveillance), un moyen de commande (tel qu'un actionneur électrique de commande de vol d'un avion ou de dosage air/carburant d'une turbine d'hélicoptère), un moyen de régulation (tel qu'une chaîne de rétroaction), etc.

Le cas d'une unité d'actionnement électromagnétique comportant un moteur à induction pas à pas sera plus particulièrement étudié.

Par défaillance, on entend une déviation entre le service délivré par un système et le service attendu. Une défaillance est entraînée par une erreur, en tant qu'altération de l'état du système. Cette erreur est causée par un défaut.

Une défaillance affectant un système peut avoir des conséquences plus ou moins grave sur le fonctionnement du véhicule. On parlera de la criticité du système.

Différentes normes sont en vigueur pour classer les systèmes selon leur criticité. Par exemple, dans le domaine avionique, la norme ARP 4754 permet de classer selon différents niveaux DAL, pour « Design Assurance Level », la criticité d'un système. Cette échelle s'étend entre un niveau faiblement critique E, et un niveau hautement critique A. Dans ce dernier niveau, le taux de défaillance possible du système par heure d'utilisation doit être inférieur à $10^{-9}$.

Un système critique doit ainsi répondre à un certain nombre de critères permettant de garantir la sûreté de son fonctionnement.

Dans ce cadre, différentes notions ont été développées. En particulier, la notion de fiabilité du système critique indique le nombre de défaillances de toute nature pouvant affecter un système. La notion de sécurité du système critique indique le nombre de défaillances dont les conséquences sont catastrophiques pour le véhicule.

Pour améliorer la fiabilité d'un système critique, différentes démarches peuvent être suivies, en particulier en intégrant au système critique une voie de surveillance de la voie principale de commande intégrant l'unité d'actionnement.

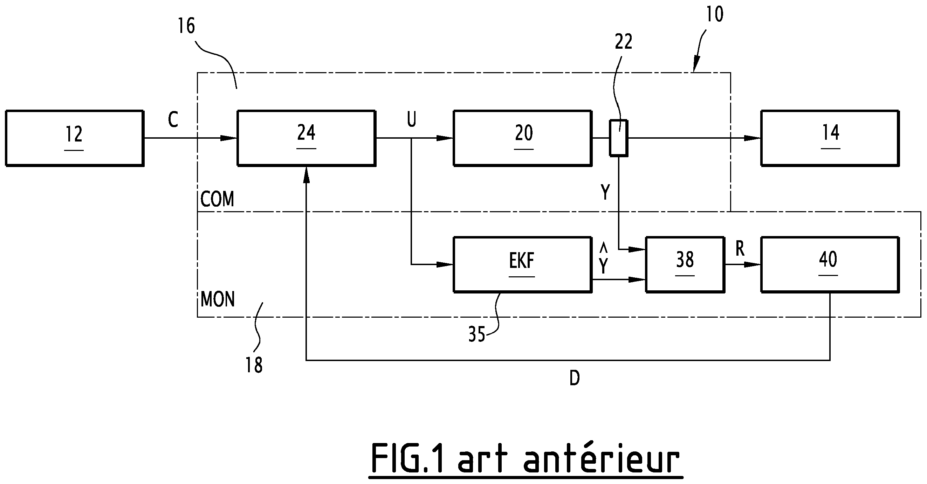

Est représenté sur la figure 1 un tel système critique. Le système 10, est interposé entre un calculateur 12 et un système mécanique 14, actionné par le système 10. Le système 10 comporte une voie de commande COM 16 et une voie de surveillance MON 18.

La voie de commande COM 16 comporte, en tant qu'unité d'actionnement, un moteur hybride pas à pas 20. Le moteur 20 est commandé par un module de commande 24 propre à générer une commande à partir d'une consigne générée par le calculateur 12. En sortie du moteur 20, plusieurs variables de sortie sont mesurées par des capteurs 22 adaptés.

La voie de surveillance MON 18 est adaptée à la surveillance du moteur 20. La voie de surveillance MON 18 comporte un module 35 propre à déterminer une estimation des variables de sortie à partir de la commande appliquée au moteur. La voie de surveillance comporte un module 38 de calcul de résidu à partir des variables mesurées et des variables estimées. La voie de surveillance comporte un module 40 de diagnostic propre à comparer chaque résidu à un seuil prédéterminé et à émettre un signal d'inhibition à destination du module de commande 24 dès que la valeur d'un résidu dépasse le seuil correspondant.

Cette solution de l'état de la technique présente les inconvénients suivants.

L'unité d'actionnement de la voie de commande comporte des éléments qui ne sont pas linéaires, tels que le moteur et les capteurs, éventuellement le module de commande. Le module d'estimation de la voie de surveillance est fondé sur un modèle de l'unité d'actionnement surveillée qui est soit un modèle linéaire, soit un modèle non-linéaire.

Un modèle linéaire est trop approximatif pour pouvoir être valablement utilisé pour surveiller un système embarqué critique.

Un modèle non-linéaire est plus représentatif du comportement de l'unité d'actionnement surveillée, mais est complexe à la fois sur le plan théorique et sur le plan de la mise en œuvre. Un module d'estimation fondé sur un modèle non-linéaire a recours à un plus grand nombre de grandeurs de sortie et nécessite des capacités de calcul importantes pour réaliser le procédé de surveillance.

Dans les deux cas, linéaire et non-linéaire, il est nécessaire d'utiliser des seuils élevés sur les résidus pour être robuste aux perturbations de l'unité d'actionnement et aux incertitudes du modèle utilisé, c'est-à-dire limiter le nombre de fausses alarmes, non-détection de défaut, etc.

L'article de A. BOBRINSKOY et al, "Dynamic inversion of a flight critical actuator for fault diagnosis", 2013 IEEE/AIAA 32ND DIGITAL AVIONICS SYSTEMS CONFERENCE (DASC), IEEE. 5 octobre 2013 (2013-10-05) divulgue un système comportant une chaine de commande d'un moteur pas à pas, dont le comportement non linéaire est du type différentiellement plat. Pour la détection de panne, il est prévu d'intégrer le moteur dans une unité d'actionnement ayant un comportement linéaire, de manière à pouvoir surveiller ladite unité d'actionnement au moyen d'un estimateur mettant en œuvre un filtre de Kalman étendu (EKF) fondé sur le modèle linéaire de l'unité d'actionnement.

On connaît également l'article de A . BOBRINSKOY et al, "Model-based fault détection and isolation design for flight-critical actuators in a harsh environment", 2012 IEEE/AIAA 31 ST DIGITAL AVIONICS SYSTEMS CONFEFiENCE (DASC), 1 octobre 2012 (2012-10-01), pages 1-17.

La présente invention a pour but de pallier aux problèmes précités, notamment pour garantir un niveau de fiabilité et de disponibilité acceptable d'un système critique.

Pour cela, l'invention a pour objet un système critique, notamment de vol, et un procédé de surveillance d'un tel système critique conformément aux revendications annexées.

L'invention et ses avantages seront mieux compris à la lecture de la description qui va suivre, donnée uniquement à titre illustratif et non limitatif, d'un exemple de réalisation, faite en se référant aux dessins annexés sur lesquels :

- la figure 1 est une représentation sous forme de blocs d'un système critique selon l'art antérieur ;
- la figure 2 est une représentation sous forme de blocs d'un système critique selon l'invention ;
- la figure 3 est une représentation sous forme de blocs de la voie de surveillance du système critique de la figure 2 ;
- les figures 4 à 19 représentent des graphes permettant de comparer l'invention à l'état de la technique ; et,
- la figure 20 est une représentation sous forme de blocs d'un système critique redondé selon l'invention.

Une classe particulière de systèmes, dits « systèmes plats », admet une équivalence bijective, dénommée « inversion dynamique », entre un modèle non-linéaire décrivant le comportement d'un système et un modèle linéaire équivalent. Dans le module d'estimation, en effectuant une linéarisation par inversion dynamique, puis en utilisant le modèle linéaire équivalent, il est possible de surveiller le système, et ceci en réutilisant les outils classiquement utilisés pour le diagnostic des systèmes linéaires.

Dans ce qui suit, un procédé de détection de défaut fondé sur des observateurs est appliqué à une unité de commande qui est constituée d'un moteur pas à pas hybride, ou moteur MPPH.

De manière générale, un système non linéaire d'ordre n répond à l'équation dynamique suivante :

$$\dot{\mathbf{x}} = f(\mathbf{x}, \mathbf{u}), \ \mathbf{x} \in \mathbb{R}^n, \mathbf{u} \in \mathbb{R}^m \qquad (1)$$

où :

- x est un vecteur de dimension n représentant l'état instantané du système,
- u est un vecteur de dimension m dont les composantes $u_i$ représentant les entrées du système non-linéaire,
- f est une fonction suffisamment dérivable

Un système non linéaire est plat, lorsqu'il existe un jeu de m variables, formant les composantes $z_i$ d'un vecteur de sortie plate, **z**, qui dépendent du vecteur d'état **x** et du vecteur d'entrée **u** et de leurs dérivées temporelles, selon la relation :

$$\mathbf{z} = \psi_z \left( \mathbf{x}, \mathbf{u}, \dot{\mathbf{u}}, \dots, \mathbf{u}^{(p)} \right) \qquad (2),$$

tels que le vecteur d'état et le vecteur d'entrée puissent s'exprimer uniquement à partir du vecteur de sortie plate z et de ses dérivées, selon les relations :

$$\mathbf{x} = \psi_x \left( \mathbf{z}, \dot{\mathbf{z}}, \dots, \mathbf{z}^{(q)} \right) \qquad (3)$$

$$\mathbf{u} = \psi_u \left( \mathbf{z}, \dot{\mathbf{z}}, \dots, \mathbf{z}^{(q+1)} \right) \qquad (4),$$

où :

- $g^{(p)}$ représente la dérivée $p^{ième}$ de la fonction g par rapport au temps t.

On montre qu'à tout système non-linéaire plat correspond un système linéaire équivalent, dont le vecteur d'entrée est noté **v** et dont le vecteur de sortie est le vecteur de sortie plate **z.**

La transformation permettant de passer d'un système non linéaire au système linéaire équivalent est une opération de linéarisation. Une procédure possible de linéarisation est l'utilisation d'une inversion dynamique endogène (« endogenous feedback linearization» en anglais), connue en mathématique.

Selon cette procédure, les composantes $v_i$ du vecteur d'entrée v du système linéaire équivalent sont données par :

$$\begin{cases} v_1 = z_1^{(k_1)} \\ \quad\vdots \\ v_m = z_m^{(k_m)} \end{cases} \tag{5},$$

où $k_i$ est le degré de dérivation maximal de la composante $z_i$ du vecteur de sortie plate **z,** intervenant dans la relation (4).

Pour le cas particulier d'un moteur MPPH, le modèle non-linéaire de sa dynamique est obtenu à partir des équations électriques régissant le comportement du moteur dans le référentiel ab du stator :

$$u_a = r.i_a + L.\frac{di_a}{dt} + K_E.\omega.\sin(n.\vartheta_m) \tag{6}$$

$$u_b = r.i_b + L.\frac{di_b}{dt} - K_E.\omega.\cos(n.\vartheta_m) \tag{7},$$

où :

- $(u_a,u_b)$ et $(i_a,i_b)$ sont respectivement les tensions et les courants appliqués et circulant dans les phases $\underline{a}$ et $\underline{b}$ du stator du moteur, selon une dénomination courante connue de l'homme du métier,
- r et L sont respectivement la résistance et l'inductance des phases du stator,
- $K_E$ la constante de la force électromotrice,
- n le nombre de pôles du rotor du moteur,
- $\vartheta_m$ est la position angulaire du rotor, et
- $\omega$ est la vitesse angulaire du rotor,

ainsi que les équations mécaniques :

$$J.\frac{d\omega}{dt} = T_{em} - T_{det} - B\omega \tag{8}$$

$$\frac{d\vartheta_m}{dt} = \omega \tag{9},$$

où :

- J est le moment d'inertie du rotor du moteur,
- B est un coefficient de frottements visqueux,
- $T_{em}$ est le couple électromécanique,
- $T_{det}$ est le couple de détente.

$T_{em}$ est donné par l'équation suivante : $T_{em} = -K_t(i_a.\sin(n\vartheta_m) - i_b.\cos(n\vartheta_m))$ où :

- $K_t$ est la constante de couple associée au moteur.

Dans ce qui suit le couple de détente $T_{det}$ est omis, car son amplitude est inférieure à 10 % du couple électromécanique $T_{em}$.

De manière connue en soi, le modèle non-linéaire exprimé dans le repère $\underline{ab}$ est exprimé dans le repère $\underline{dq}$ du rotor en utilisant la transformation matricielle suivante :

$$P(\vartheta_m) = \begin{bmatrix} \cos(n\vartheta_m) & \sin(n\vartheta_m) \\ -\sin(n\vartheta_m) & \cos(n\vartheta_m) \end{bmatrix} \tag{10}$$

En conséquence, le modèle non-linéaire dans le repère $\underline{dq}$ du moteur est donné par :

$$u_d = r.i_d + L.\frac{di_d}{dt} - L.n.\omega.i_q \tag{11}$$

$$u_q = r.i_q + L.\frac{di_q}{dt} + L.n.\omega.i_d + K_t.\omega \tag{12}$$

$$J.\frac{d\omega}{dt} = K_t.i_q - B\omega \tag{13}$$

$$\frac{d\vartheta_m}{dt} = \omega \tag{14},$$

On vérifie ensuite que ce modèle non-linéaire est effectivement celui d'un système non-linéaire plat. Pour cela, on définit les vecteurs suivants :

- le vecteur d'entrée $\boldsymbol{u}$ possède deux composantes (m=2), qui correspondent respectivement aux tensions : $u_1 = u_d$ et $u_2 = u_q$,
- le vecteur d'état x du modèle non-linéaire possède quatre composantes (n=4), qui correspondent respectivement aux courants, à la vitesse angulaire et à la position angulaire : $x_1 = i_d$, $x_2 = i_q$, $x_3 = \omega$, et $x_4 = \vartheta_m$,
- le vecteur de sortie plate $\boldsymbol{z}$ possède deux composantes (m=2), qui correspondent respectivement au courant direct et à la position angulaire : $z_1 = i_d$ et $z_2 = \vartheta_m$.

Soit, sous forme vectorielle :

$$\mathbf{u} = \begin{pmatrix} u_d \\ u_q \end{pmatrix} \tag{15}$$

$$\mathbf{x} = \begin{pmatrix} i_d \\ i_q \\ \omega \\ \vartheta_m \end{pmatrix} \tag{16}$$

$$\mathbf{z} = \begin{pmatrix} i_d \\ \vartheta_m \end{pmatrix} \tag{18},$$

Les équations précédentes conduisent alors à :

$$x_1 = z_1 \tag{19}$$

$$x_2 = \frac{J}{K_t}.\ddot{z}_2 + B.\dot{z}_2 \tag{20}$$

$$x_3 = \dot{z}_2 \tag{21}$$

$$x_4 = z_2 \tag{22},$$

et :

$$u_1 = R. z_1 + L\dot{z}_1 - Ln. \dot{z}_2 \left(\frac{J}{K_t}.\ddot{z}_2 + B.\dot{z}_2\right) \tag{23}$$

$$u_2 = R. \left(\frac{J}{K_t}.\ddot{z}_2 + B.\dot{z}_2\right) + L. \left(\frac{J}{K_t}.\dddot{z}_2 + B.\ddot{z}_2\right) + \dot{z}_2(K_t + nLz_1) \tag{24}$$

Ainsi, **u** et **x** s'expriment en fonction de **z** et de ses dérivées comme requis par la relation (3) et (4). Le modèle non-linéaire est donc plat. Il est par conséquent linéarisable par inversion dynamique.

Puisque, dans les équations ci-dessus, l'ordre maximal de dérivation temporelle de la première sortie plate $z_1$ est 1 et puisque l'ordre maximal de dérivation temporelle de la seconde sortie plate $z_2$ est 3, le vecteur d'entrée v du système linéaire équivalent est :

$$v_1 = \dot{z_1} \tag{25}$$

$$v_2 = \dddot{z_2} \tag{26}$$

Soit :

$$\mathbf{v} = \begin{pmatrix} \dot{i_d} \\ \dddot{\vartheta_m} \end{pmatrix} \tag{27}$$

Le modèle linéaire équivalent est alors donné par :

$$\begin{pmatrix} z_1 \\ z_2 \end{pmatrix} = \begin{bmatrix} s & 0 \\ 0 & s^3 \end{bmatrix} \begin{pmatrix} v_1 \\ v_2 \end{pmatrix} \tag{28},$$

expression dans laquelle l'intégration temporelle est représentée par la multiplication par s, comme cela est connu de l'homme du métier.

Sur la base de ces résultats mathématiques, la structure d'un système critique va maintenant être décrite.

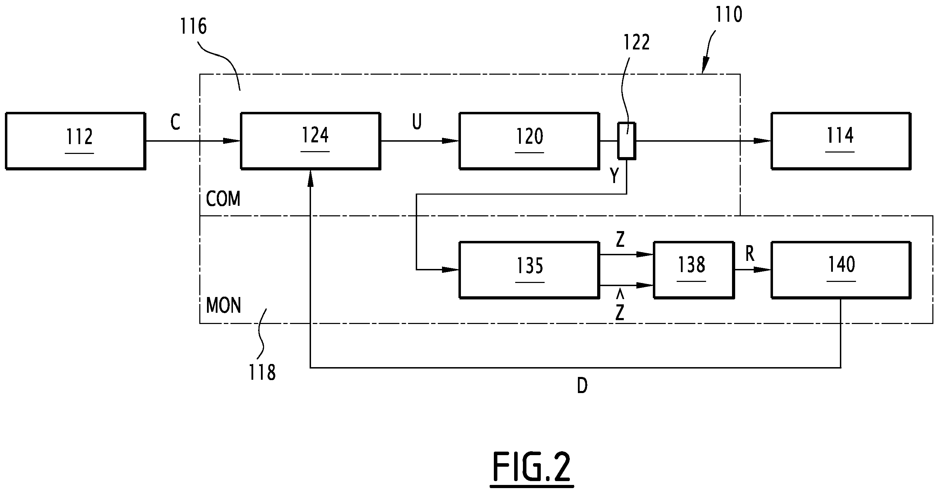

Le système critique de commande de la figure 2, repéré de manière générale par le chiffre 110, est interposé entre un calculateur 112 et un système mécanique 114, actionné par le système 110.

Le système 110 comporte une voie de commande COM 116 et une voie de surveillance MON 118.

La voie de commande COM 116 comporte, en tant qu'unité d'actionnement surveillée, un moteur MPPH 120.

Le moteur 120 est commandé par application d'une grandeur vectorielle d'entrée correspondant au vecteur u des tensions $u_a$ et $u_b$.

En sortie du moteur 120, une grandeur vectorielle de sortie est mesurée au moyen d'une pluralité de capteurs 122 adaptés. Le vecteur de sortie mesurée y correspond aux courants $i_a$ et $i_b$ et à la position angulaire $\vartheta_m$.

La voie de commande COM 116 comporte un module de commande 124 propre à générer un vecteur d'entrée **u** du moteur 120 à partir d'un signal de consigne C. Le signal de consigne C est généré par le calculateur 112.

La voie de surveillance MON 118 est adaptée à la surveillance du moteur 120.

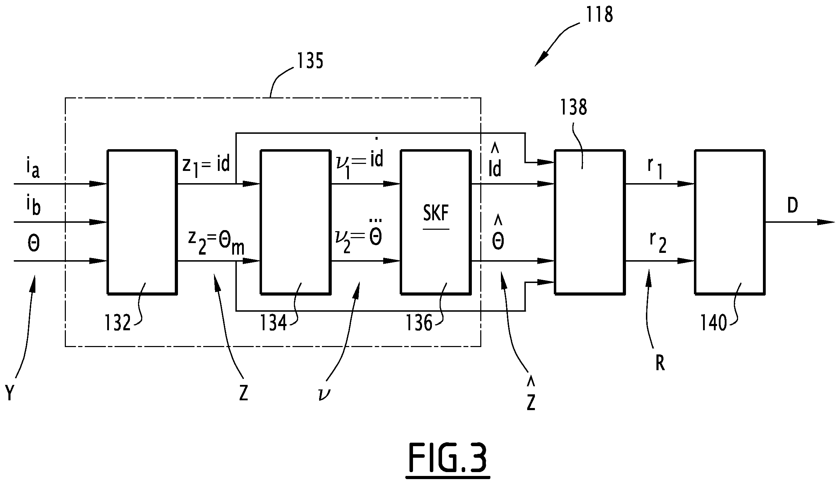

Comme cela est représenté plus en détail sur la figure 3, la voie de surveillance MON 118 comporte un module 132 de passage dans le repère dq, un module 134 d'inversion dynamique, un module 136 d'estimation, un module 138 de calcul de résidu et un module 140 de diagnostic.

Le module 132 prend en entrée le vecteur de sortie mesurée **y**. Il est propre à appliquer la matrice P sur les courants $i_a$ et $i_b$ pour obtenir les courants $i_d$ et $i_q$. A la sortie du module 132, est obtenu un vecteur de sortie plate mesurée **z**, dont les composantes sont la sortie plate $z_1$, correspondant au courant $i_d$, et la sortie plate $z_2$, correspondant à la position angulaire $\vartheta_m$. Le module 134 permet de déterminer le vecteur d'entrée v du modèle linéaire équivalent. A partir un vecteur de sortie plate **z**, le module 134 calcule la première entrée du modèle linéaire équivalent $v_1$, comme la dérivée temporelle d'ordre un du courant $i_d$, et la seconde entrée du modèle linéaire équivalent $v_2$, comme la dérivée temporelle d'ordre trois de la position angulaire $\vartheta_m$.

6

Le module 136 d'estimation est propre à estimer un vecteur de sortie plate estimée $\hat{\mathbf{z}}$, sur la base du modèle linéaire équivalent. Le module 136 prend en entrée le vecteur d'entrée $\nu$ du système linéaire équivalent généré en sortie du module 134.

Dans un mode de réalisation préféré, le module 136 met en œuvre un algorithme SKF (pour "Standard Kalman Filter" en anglais) discret afin d'estimer le vecteur de sortie plate estimée $\hat{\mathbf{z}}$. Un tel algorithme est connu de l'homme du métier.

Le module 136 d'estimation est propre à estimer un vecteur de sortie plate estimée $\hat{\mathbf{z}}$, sur la base du modèle linéaire équivalent. Le module 136 prend en entrée le vecteur d'entrée $\mathbf{v}$ du système linéaire équivalent généré en sortie du module 134.

Dans un mode de réalisation préféré, le module 136 met en œuvre un algorithme SKF (pour "Standard Kalman Filter" en anglais) discret afin d'estimer le vecteur de sortie plate estimée $\hat{\mathbf{z}}$. Un tel algorithme est connu de l'homme du métier.

Le module 138 est propre à calculer des résidus pour chaque composante du vecteur de sortie plate. Le module 138 est propre à soustraire la valeur mesurée du courant $i_d$, obtenue en sortie du module 132, avec la valeur estimée du courant $\widehat{i_d}$, obtenue en sortie du module 136, de manière à obtenir un premier résidu $r_1$.

Le module 138 est propre à soustraire la valeur mesurée de l'angle $\vartheta_m$, obtenue en sortie du module 132, avec la valeur estimée de l'angle $\widehat{\vartheta_m}$, obtenue en sortie du module 136, de manière à obtenir un second résidu $r_2$.

Le vecteur de résidu $\mathbf{R}$ ainsi calculé est transmis au module 140 de diagnostic.

Le module 140 effectue de la surveillance de pannes du type court-circuit au niveau du bobinage du stator du moteur 120, en mettant en œuvre des algorithmes de détection et de localisation de défauts initialement adaptés à des systèmes linéaires. Le module 140 est ainsi conforme aux modules de diagnostic de l'état de la technique associés à des systèmes linéaires.

Par exemple, le module 140 est propre à comparer chaque résidu $r_i$ à un seuil $r_{i0}$ prédéterminé et à émettre un signal d'inhibition D dès qu'un au moins des résidus est supérieur au seuil correspondant.

Le signal d'inhibition D est appliqué au module de commande 124 du moteur 120. Ce dernier est propre à interrompre le fonctionnement du moteur 120 lors de la réception du signal d'inhibition D.

Si un défaut est détecté, la décision émise par le module de diagnostic permet d'agir avant qu'une panne ne se propage dans le reste de la chaîne et détériore d'autres composants.

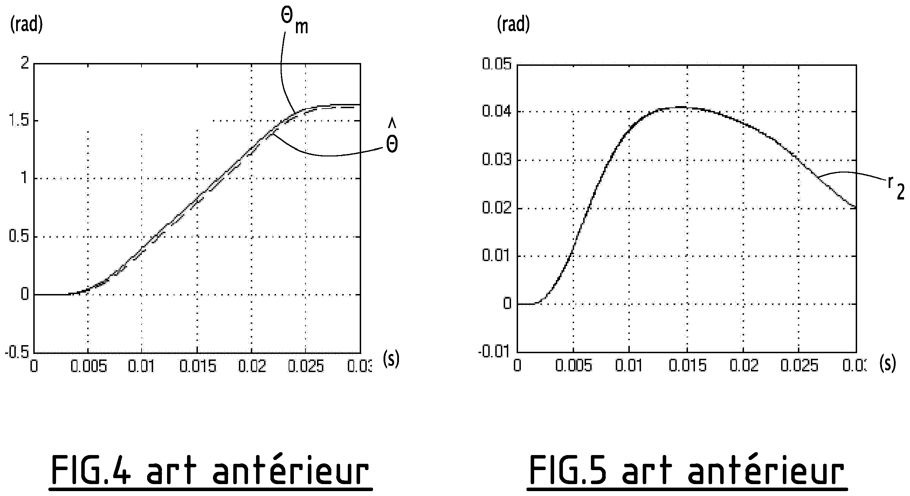

Les figures 4 à 19 représentent des simulations du comportement du système de la figure 2 en comparaison de celui de la figure 1. Pour ces simulations, le module d'estimation du système de la figure 1 met en œuvre un algorithme EKF (pour "Extended Kalman Filter" en anglais) discret, fondé sur une modélisation non linéaire du moteur à surveiller. Un tel algorithme est également connu de l'homme du métier.

Les simulations sont obtenues avec les valeurs suivantes des paramètres du modèle non linéaire du moteur :
r =0,55 $\Omega$ ; L= 1,5 mH ; J = 4,5x10$^{-5}$ kg.m2 ; B= 8x10$^{-4}$ Nm.s/rad ; n=200 ; Kt=0,19 Nm/A.

Les figures 4 à 11 correspondent à des simulations sans défaillance du moteur.

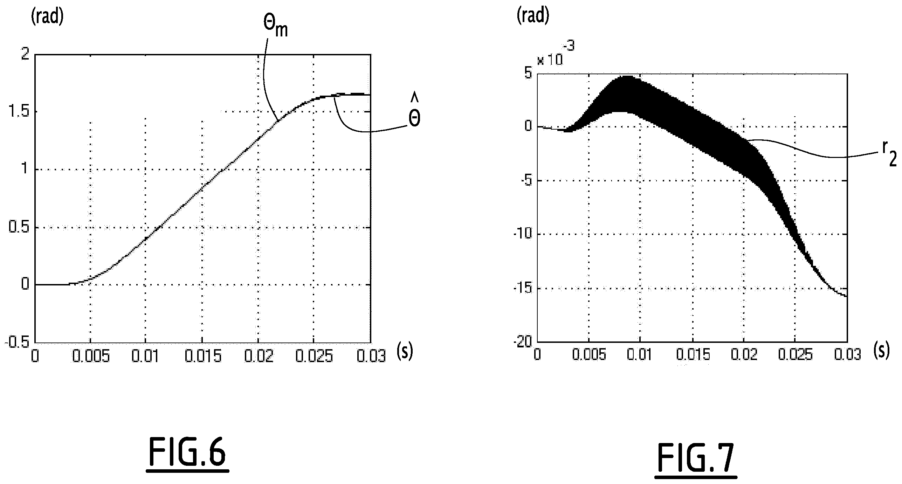

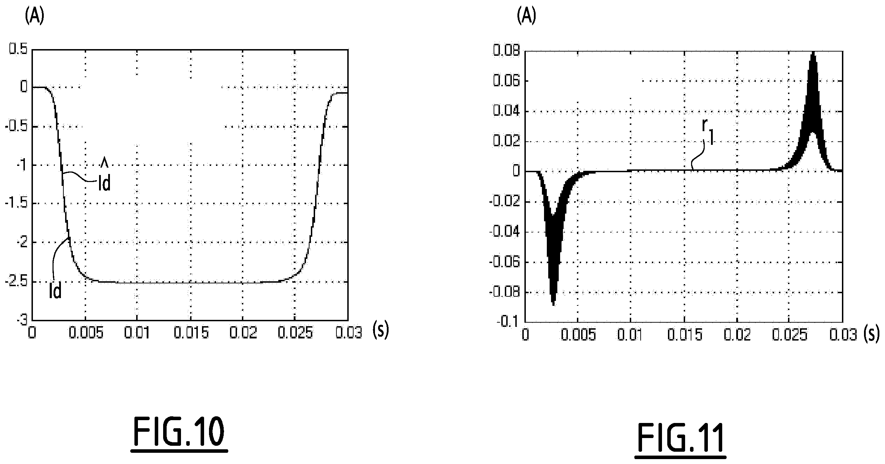

L'amplitude maximale des résidus $r_1$ et $r_2$ (figures 11 et 7) de l'estimation SKF après inversion dynamique est inférieure à celle des résidus correspondants de l'estimation EKF.

De plus, l'estimation du courant (figure 10) ou de la position angulaire (figure 6) est obtenue plus rapidement pour l'estimation SKF après inversion dynamique, que pour l'estimation EKF.

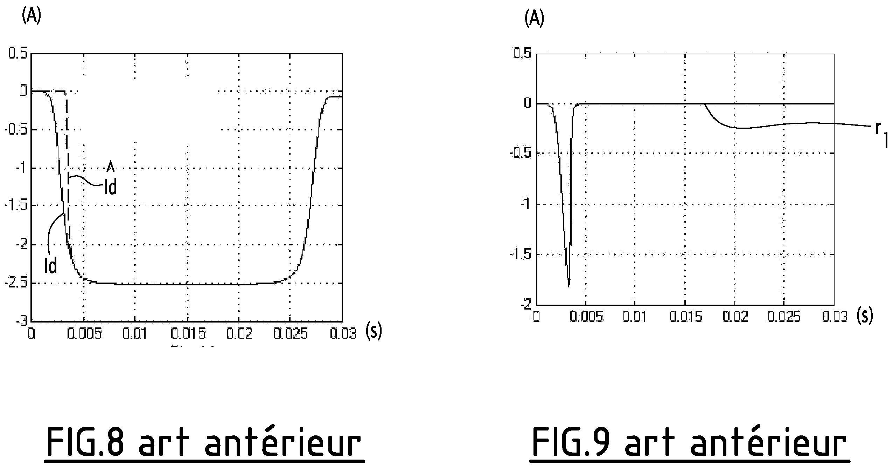

Il est à noter que sur la figure 8, et sur la figure 9 correspondante, l'écart entre le courant estimé et le courant mesuré est causé par l'initialisation de l'estimateur EKF.

De plus, la zone noire des figures 7 et 11 est due à une oscillation rapide du résidu.

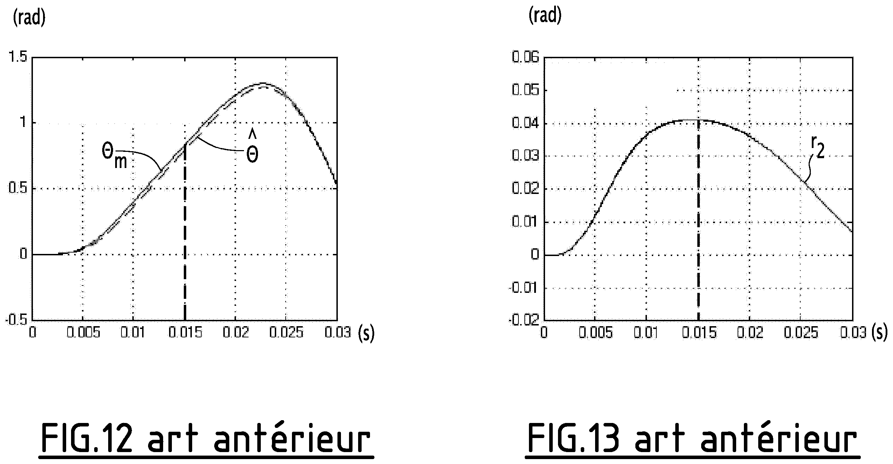

Les figures 12 à 19 correspondent à une simulation avec la survenue d'un défaut. Ce défaut consiste en un court-circuit apparaissant 0,015 seconde après le début de la simulation.

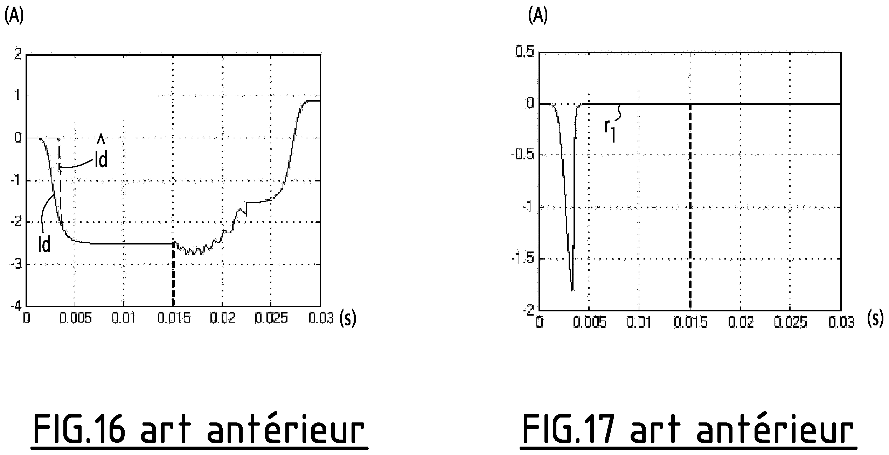

Sur la figure 12, l'estimation de la position angulaire suit la mesure de la position angulaire. De mêmes, sur la figure 16, l'estimation du courant suit la mesure du courant. L'estimation EKF n'est donc pas sensible à l'apparition du défaut. En particulier, l'amplitude du résidu $r_1$ (figure 17) est sensiblement nulle.

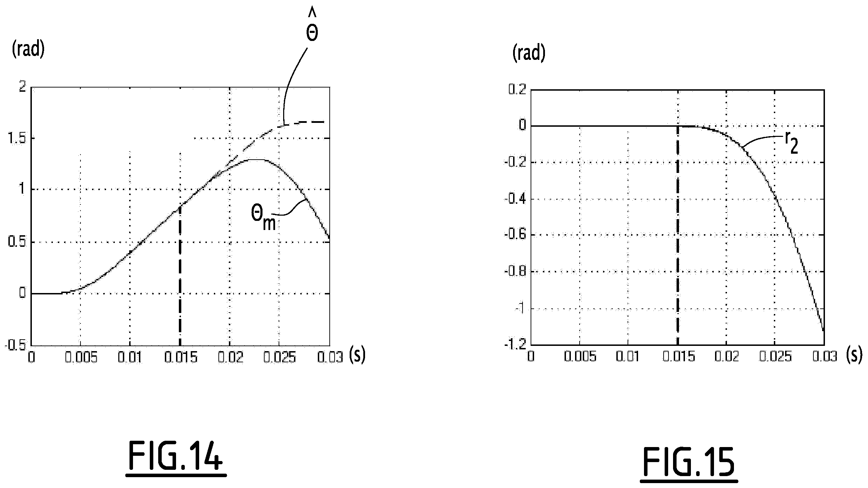

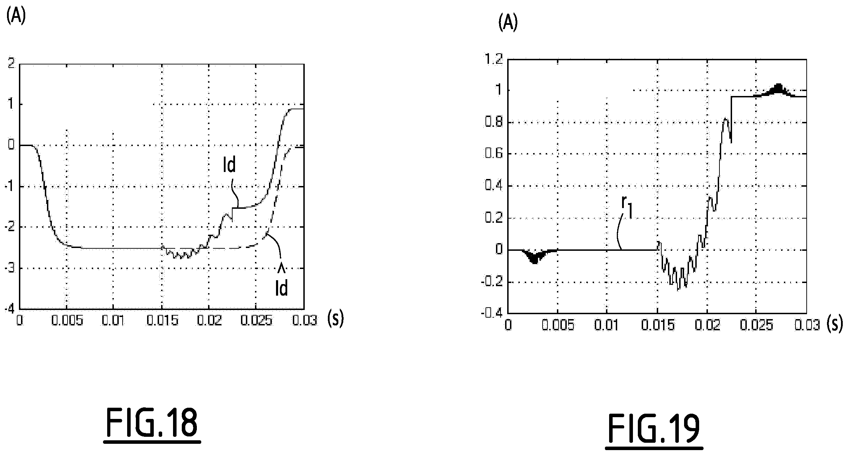

En revanche, sur les figures 14 et 18, on note une claire différence entre les grandeurs estimées et les grandeurs mesurées après la survenue du défaut. Ceci se traduit par une évolution significative de l'amplitude des résidus $r_2$ (figure 15) et $r_1$ (figure 19) au-delà de 0,015 s.

Il est alors possible de définir des seuils $r_{10}$ et $r_{20}$ pour la détection d'une panne.

Avantageusement, l'inversion dynamique autorise le choix de seuils faibles tout en conservant une bonne robustesse aux fausses alarmes.

Avantageusement, un système critique, tel qu'un actionneur électromécanique, est redondé afin de garantir un niveau de disponibilité et d'intégrité pour la fonction qu'il réalise (orienter une gouverne ou une vanne par exemple).

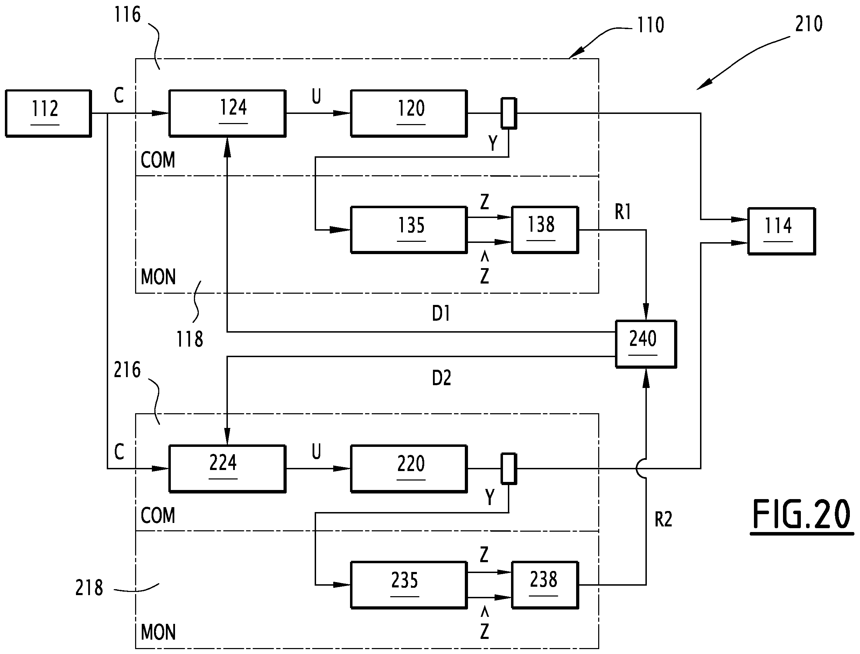

Ainsi, sur la figure 20 est présenté un système critique redondé 210 qui présente des premières voies de commande et de surveillance et des secondes voies de commande et de surveillance.

Les premières voies de commande et de surveillance sont identiques à celles du système de la figure 2. Les éléments constitutifs de ces premières voies portent les mêmes chiffres de référence que ceux utilisés sur la figure 2.

Les secondes voies de commande et de surveillance sont similaires aux premières voies. Les éléments constitutifs de ces secondes voies portent les chiffres de référence des éléments correspondant des premières voies, augmentés d'une centaine.

Pour la redondance, les premières et secondes voies de commande et de surveillance ne sont pas identiques pour garantir la disponibilité de la fonction. Elles sont réalisées dans des technologies différentes. Par exemple, sont utilisés des composants matériels différents (moteur électrique pas à pas pour la première voie et moteur DC Brushless pour la seconde), des composants logiciels différents (langage de programmation différent pour les modules d'estimation des voies de surveillance), etc.

Les modules de commandes 124 et 224 reçoivent la même consigne C.

Avantageusement, le module de diagnostic 240 est commun aux première et seconde voies de surveillance.

Les premiers résidus générés en sortie du module 138 et les seconds résidus générés en sortie du module 238 sont appliqués en entrée du module de diagnostic 240.

Ce dernier est propre à générer un premier signal d'inhibition D1 vers le module de commande 124 et un second signal d'inhibition D2 vers le module de commande 224.

Si, à partir d'un même signal de consigne appliqué en entrée des première et seconde voies de commande, le résidu d'une des voies de surveillance dépasse un seuil prédéterminé, indiquant ainsi la présence d'un défaut dans la voie de commande correspondante, le module de diagnostic est propre à émettre un signal pour inhiber cette voie défaillante. La présence de l'autre voie de commande assure le bon fonctionnement du système critique. Il est à noter que la désactivation d'une voie de commande entraine la dégradation de la disponibilité, mais le maintien de l'intégrité du système.

La voie de surveillance est avantageusement réalisée sous la forme d'un circuit logique programmable (FPGA) ou d'un microprocesseur programmé au moyen d'un programme d'ordinateur adapté.

Le procédé selon l'invention consiste ainsi à transformer un modèle non-linéaire complexe en un modèle linéaire équivalent en se fondant sur la propriété de platitude du modèle non linéaire.

Une telle transformation réalisée à chaque instant conduit à un accroissement des performances de détection des défauts.

Le système critique est plus robuste et plus disponible.

Ceci permet d'atteindre plus facilement un niveau DAL requis pour le système critique. En effet, le système critique dans son ensemble doit posséder le niveau DAL A. Cette performance peut être atteinte en réalisant le système avec des voies de commande et de surveillance respectant des niveaux DAL égaux ou inférieurs : DAL A pour l'une et DAL B pour l'autre (voire C selon l'exigence de disponibilité demandé).

Les avantages de la présente solution sont multiples.

Le nombre de paramètres à prendre en compte au niveau de la voie de surveillance est réduit, tout en améliorant la capacité de détection des défauts. En conséquence les capacités de calcul à prévoir pour la chaîne de surveillance sont réduites. Les temps de calcul sont également réduits. Les temps de développement de la chaîne de surveillance sont également réduits et par conséquent les coûts afférents.

Les capteurs et actionneurs sont sensibles aux perturbations extérieures. Intrinsèquement, le procédé selon l'invention est moins sensible à de telles perturbations, en particulier en augmentant les seuils de détection sur les résidus il est possible de s'affranchir de telles perturbations. Le taux de fausses alarmes est ainsi réduit.

En variante, le modèle non-linéaire prend en compte ces perturbations. De ce fait, une meilleure précision est obtenue. En effet, la connaissance des canaux d'action des perturbations permet d'avoir des indicateurs de diagnostic ayant une sensibilité accrue aux défauts et une sensibilité moindre aux perturbations. De cette manière, le diagnostic est robuste aux perturbations affectant le dispositif surveillé.

Le module de diagnostic peut avantageusement mettre en œuvre des algorithmes connus associés aux systèmes linéaires, à cause de l'utilisation du modèle linéaire équivalent dans l'estimateur des grandeurs de sortie pertinentes. Ces algorithmes présentent une complexité réduite. Ceci participe à la simplicité de développement du système.

**Revendications**

1. Système critique, notamment de vol, du type comportant une voie de commande (COM) comportant une unité d'actionnement comportant un moteur à induction (120) ayant un comportement non-linéaire, qui est propre à être commandée par application d'une grandeur d'entrée (*u*) et dont l'état est **caractérisé par** une grandeur de sortie mesurée **y**, qui est mesurée par des capteurs (122) adaptés, la grandeur de sortie mesurée **y** correspondant aux

courants $i_a$ et $i_b$ dans le moteur et à la position angulaire $\vartheta_m$ du rotor du moteur,

**caractérisé en ce que**, le comportement de l'unité d'actionnement étant décrit par un modèle non-linéaire plat, pour lequel il existe un modèle linéaire équivalent permettant de passer d'une grandeur d'entrée **(v)** à une grandeur de sortie plate **($z$, $\hat{z}$)**

le système comporte une voie de surveillance (MON) de la voie de commande, comportant une unité d'estimation qui comporte :

- un module (132) de passage dans un repère dq, prenant en entrée la grandeur de sortie mesurée **y,** appliquant une matrice de passage (P) sur les courants $i_a$ et $i_b$ pour obtenir des courants $i_d$ et $i_q$, et délivrant une grandeur de sortie plate mesurée **z,** dont les composantes sont une première sortie plate $z_1$, correspondant au courant $i_d$, et une seconde sortie plate $z_2$, correspondant à la position angulaire $\vartheta_m$,

un module (134) de linéarisation par inversion dynamique propre, à partir de la grandeur de sortie plate mesurée **z,** à calculer la grandeur d'entrée du modèle linéaire équivalent ;

- un module (136) d'estimation d'une grandeur de sortie plate estimée ($\hat{z}$) à partir de la grandeur d'entrée du modèle linéaire équivalent, sur la base dudit modèle linéaire équivalent ; et,

- un module (138) de calcul d'un résidu à partir de la grandeur de sortie plate estimée **($\hat{z}$)** et de la grandeur de sortie plate mesurée **(z).**

2. Système selon la revendication 1, **caractérisé en ce que** le module d'estimation met en œuvre un observateur SKF.

3. Système selon la revendication 1 ou la revendication 2, dans lequel le moteur à induction (120) est du type pas à pas hybride.

4. Système selon la revendication 3, dans lequel la grandeur d'entrée du modèle linéaire équivalent est :

$$\mathbf{v} = \begin{pmatrix} \dot{i}_d \\ \dddot{\vartheta}_m \end{pmatrix}$$

où $\dot{i}_d$ est la dérivée première par rapport au temps du courant dans le moteur exprimée dans le repère dq ; et $\dddot{\vartheta}_m$ est la dérivée troisième par rapport au temps de la position angulaire du rotor du moteur, et la grandeur de sortie plate mesurée est :

$$\mathbf{z} = \begin{pmatrix} i_d \\ \vartheta_m \end{pmatrix}.$$

5. Système selon la revendication 4, dans lequel les équations mécaniques et électromagnétiques du comportement du moteur (120) permettent de définir le modèle linéaire équivalent selon :

$$\begin{pmatrix} z_1 \\ z_2 \end{pmatrix} = \begin{bmatrix} s & 0 \\ 0 & s^3 \end{bmatrix} \begin{pmatrix} v_1 \\ v_2 \end{pmatrix}$$

où s représente l'intégration temporelle.

6. Système selon l'une quelconque des revendications 1 à 5, dans lequel l'unité d'actionnement comporte, en outre, un module (124) de commande propre, à partir d'une grandeur de consigne (C), à générer la grandeur d'entrée de l'unité d'actionnement (120).

7. Système selon l'une quelconque des revendications 1 à 6, **caractérisé en ce que** la voie de surveillance comporte en outre un module de diagnostic (40) prenant en entrée au moins un résidu et propre à générer un signal d'inhibition (D) de la voie de commande (COM).

8. Système selon l'une quelconque des revendications précédentes, dans lequel la voie de commande est une première voie de commande (116) et la voie de surveillance est une première voie de surveillance (118), cette dernière générant des premiers résidus (R1), le système comporte en outre une seconde voie de commande (216) associée à une seconde voie de surveillance (218), propres à redonder les premières voies de commande et de surveillance, la seconde voie de surveillance générant des seconds résidus (R2),

le système comportant en outre un module de diagnostic (240) commun, propre à inhiber l'une et/ou l'autre des première et seconde voies de commande, dès qu'un défaut est détecté, sur la base des premiers et seconds résidus.

**9.** Procédé de surveillance d'un système critique, notamment de vol, du type comportant une voie de commande (COM) comportant une unité d'actionnement comportant un moteur à induction (120) ayant un comportement non-linéaire, qui est propre à être commandée par application d'une grandeur d'entrée (u) et dont l'état est **caractérisé par** une grandeur de sortie mesurée **y,** qui est mesurée par des capteurs (122) adaptés, la grandeur de sortie mesurée **y** correspondant aux courants $i_a$ et $i_b$ dans le moteur et à la position angulaire $\vartheta_m$ du rotor du moteur, **caractérisé en ce que**, le comportement de l'unité d'actionnement du système étant décrit par un modèle non-linéaire plat pour lequel il existe un modèle linéaire équivalent permettant de passer d'une grandeur d'entrée (ν) à une grandeur de sortie plate **($z,\hat{z}$)**, le procédé comporte :

- un étape de passage dans un repère dq, prenant en entrée la grandeur de sortie mesurée **y,** appliquant une matrice de passage (P) sur les courants $i_a$ et $i_b$ pour obtenir des courants $i_d$ et $i_q$, et délivrant une grandeur de sortie plate mesurée **z,** dont les composantes sont une première sortie plate $z_1$, correspondant au courant $i_d$, et une seconde sortie plate $z_2$, correspondant à la position angulaire $\vartheta_m$,
- une étape de linéarisation par inversion dynamique propre, à partir de la grandeur de sortie plate mesurée **z,** à calculer une grandeur d'entrée du modèle linéaire équivalent,
- une étape d'estimation d'une grandeur de sortie plate estimée **($\hat{z}$)** du système linéaire équivalent, à partir de la grandeur d'entrée calculée et, en utilisant ledit modèle linéaire équivalent,
- une étape de calcul d'au moins un résidu par différence entre la grandeur de sortie plate estimée **($\hat{z}$)** et la grandeur de sortie plate mesurée **(z),** et
- une étape de diagnostic fondée sur la comparaison du ou de chaque résidu par rapport à une valeur seuil.

**Patentansprüche**

**1.** Kritisches System, insbesondere Flugsystem, vom Typ, welcher aufweist einen Befehlspfad (COM), welcher eine Stelleinheit aufweist, welche einen Induktionsmotor (120) mit einem nichtlinearen Verhalten aufweist, welcher dazu geeignet ist, durch Anlegen einer Eingangsgröße (u) angesteuert zu werden, und dessen Zustand durch eine gemessene Ausgangsgröße **y,** welche durch geeignete Sensoren (122) gemessen wird, charakterisiert wird, wobei die gemessene Ausgangsgröße **y** mit Strömen $i_a$ und $i_b$ in dem Motor und der Winkellage $\vartheta_m$ des Rotors des Motors korrespondiert,

**gekennzeichnet dadurch, dass** das Verhalten der Stelleinheit durch ein flaches, nichtlineares Modell beschrieben wird, für welches ein lineares Äquivalenzmodell existiert, welches das Überführen einer Eingangsgröße (ν) in eine flache Ausgangsgröße **(z, $\hat{z}$)** erlaubt,

wobei das System einen Überwachungspfad (MON) des Befehlspfads (COM) aufweist, welcher eine Ermittlungseinheit aufweist, welche aufweist:

- ein Modul (132) des Überführens in ein Koordinatensystem dq, welches die gemessene Ausgangsgröße **y** als Eingangsgröße nutzt, eine Überführungsmatrix (P) auf die Ströme $i_a$ und $i_b$ anwendet, um Ströme $i_d$ und $i_q$ zu erhalten, und eine flache, gemessene Ausgangsgröße **z** liefert, deren Komponenten ein flacher, erster Ausgang $z_1$, welcher dem Strom $i_d$ entspricht, und ein flacher, zweiter Ausgang $z_2$, welcher der Winkellage $\vartheta_m$ entspricht, sind,

ein Modul (134) zur Linearisierung durch dynamische Inversion, welches dazu geeignet ist, aus der flachen, gemessenen Ausgangsgröße **z** die Eingangsgröße des linearen Äquivalenzmodells zu berechnen,
- ein Modul (136) zum Schätzen einer flachen, geschätzten Ausgangsgröße **($\hat{z}$)** aus der Eingangsgröße des linearen Äquivalenzmodells auf Grundlage des linearen Äquivalenzmodells, und
- ein Modul (138) zum Berechnen eines Residuums aus der flachen, geschätzten Ausgangsgröße **($\hat{z}$)** und der flachen, gemessenen Ausgangsgröße **(z).**

**2.** System gemäß dem Anspruch 1, **gekennzeichnet dadurch, dass** das Modul zum Schätzen einen SKF-Beobachter ausführt.

**3.** System gemäß dem Anspruch 1 oder dem Anspruch 2, wobei der Induktionsmotor (12) vom Typ Hybrid-Schrittmotor ist.

4. System gemäß dem Anspruch 3, wobei die Eingangsgröße des linearen Äquivalenzmodells ist:

$$\mathbf{v} = \begin{pmatrix} \dot{i}_d \\ \dddot{\vartheta}_m \end{pmatrix}$$

wobei $\dot{i}_d$ die erste Ableitung nach der Zeit des Stroms im Motor augedrückt im Koordinatensystem dq ist, und $\dddot{\vartheta}_m$ die dritte Ableitung nach der Zeit der Winkellage des Rotors des Motors ist,
und die flache, gemessene Ausgangsgröße ist:

$$\mathbf{z} = \begin{pmatrix} i_d \\ \vartheta_m \end{pmatrix}.$$

5. System gemäß dem Anspruch 4, wobei die mechanischen und elektromagnetischen Gleichungen des Verhaltens des Motors (120) es erlauben, das lineare Äquivalenzmodell zu definieren gemäß

$$\begin{pmatrix} z_1 \\ z_2 \end{pmatrix} = \begin{bmatrix} s & 0 \\ 0 & s^3 \end{bmatrix} \begin{pmatrix} v_1 \\ v_2 \end{pmatrix}$$

wobei s die zeitliche Integration repräsentiert.

6. System gemäß irgendeinem der Ansprüche 1 bis 5, wobei die Stelleinheit ferner ein Befehlsmodul (124) aufweist, welches dazu geeignet ist, aus einem Sollwert (C) die Eingangsgröße der Stelleinheit (120) zu erzeugen.

7. System gemäß irgendeinem der Ansprüche 1 bis 6, **dadurch gekennzeichnet, dass** der Überwachungspfad ferner ein Diagnosemodul (40) aufweist, welches als Eingangsgröße mindestens ein Residuum nutzt und dazu geeignet ist, ein Sperrsignal (D) des Befehlspfads (COM) zu erzeugen.

8. System gemäß irgendeinem der vorhergehenden Ansprüche, wobei der Befehlspfad ein erster Befehlspfad (116) ist und der Überwachungspfad ein erster Überwachungspfad (118) ist, wobei das letztgenannte erste Residuen (R1) erzeugt, wobei das System ferner einen zweiten Befehlspfad (216) aufweist, welcher mit einem zweiten Überwachungspfad (218) assoziiert ist, welche dazu geeignet sind, den ersten Befehlspfad und ersten Überwachungspfad redundant zu machen, wobei der zweite Überwachungspfad zweite Residuen (R2) erzeugt,
wobei das System ferner ein gemeinschaftliches Diagnosemodul (240) aufweist, welches dazu geeignet ist, den einen und/oder den anderen von dem ersten und dem zweiten Befehlspfad zu sperren, sobald ein Defekt erfasst wird, auf Grundlage der ersten und der zweiten Residuen.

9. Verfahren zur Überwachung eines kritischen Systems, insbesondere Flugsystem, vom Typ, welcher einen Befehlspfad (COM) aufweist, welcher eine Stelleinheit aufweist, welche einen Induktionsmotor (120) mit einem nichtlinearen Verhalten aufweist, welcher dazu geeignet ist, durch Anlegen einer Eingangsgröße (u) angesteuert zu werden, und dessen Zustand durch eine gemessene Ausgangsgröße **y**, welche durch geeignete Sensoren (122) gemessen wird, charakterisiert wird, wobei die gemessene Ausgangsgröße **y** mit Strömen $i_a$ und $i_b$ in dem Motor und der Winkellage $\vartheta_m$ des Rotors des Motors korrespondiert,
**gekennzeichnet dadurch, dass** das Verhalten der Stelleinheit des Systems durch ein flaches, nichtlineares Modell beschrieben wird, für welches ein lineares Äquivalenzmodell existiert, welches das Überführen einer Eingangsgröße ($v$) in eine flache Ausgangsgröße **(z, z)** erlaubt, wobei das Verfahren aufweist:

- einen Schritt des Überführens in ein Koordinatensystem dq, welches die gemessene Ausgangsgröße **y** als Eingangsgröße nutzt, eine Überführungsmatrix (P) auf die Ströme $i_a$ und $i_b$ anwendet, um Ströme $i_d$ und $i_q$ zu erhalten, und eine flache, gemessene Ausgangsgröße **z** liefert, deren Komponenten ein flacher, erster Ausgang $z_1$, welcher mit dem Strom $i_d$ entspricht, und ein flacher, zweiter Ausgang $z_2$, welcher der Winkellage $\vartheta_m$ entspricht, sind,

- einen Schritt der Linearisierung durch dynamische Inversion, welcher dazu geeignet ist, aus der flachen, gemessenen Ausgangsgröße z eine Eingangsgröße des linearen Äquivalenzmodells zu berechnen,
- einen Schritt des Schätzens einer flachen, geschätzten Ausgangsgröße ($\hat{z}$) des linearen Äquivalenzsystems aus der berechneten Eingangsgröße und unter Verwendung des linearen Äquivalenzmodells,
- einen Schritt des Berechnens mindestens eines Residuums durch Differenz zwischen der flachen, geschätzten Ausgangsgröße ($\hat{z}$) und der flachen, gemessenen Ausgangsgröße (**z**), und
- einen Diagnoseschritt, welcher auf dem Vergleich des einen oder jedes Residuums mit einem Schwellenwert beruht.

**Claims**

1. A critical system, in particular a critical flight system, of the type including a control pathway (COM) including an actuation unit comprising an induction motor (120) having a nonlinear behavior, that is able to be controlled by applying an input quantity (u) and whose state is **characterized by** a measured output quantity y, which is measured by appropriate sensors (122), the measured output quantity y corresponding to currents $i_a$ and $i_b$ in the motor and to the angular position $\vartheta_m$ of the rotor of the motor, <u>**characterized in that**</u>, the behavior of the actuation unit (120) being described by a flat nonlinear model, for which there exists an equivalent linear model making it possible to go from an input quantity $v$ to a flat output quantity (z, $\hat{z}$)

   the system includes a monitoring pathway (MON) for the control pathway, having an estimation unit that includes:

   - a module (132) for passing to the reference plane <u>dq</u>, taking the measured output vector **y** as input, applying the passage matrix (P) on the current $i_a$ and $i_b$ to obtain currents $i_d$ and $i_q$, and outputting a measured flat output quantity **z,** the components of which are a first flat output $z_1$, corresponding to the current $i_d$, and a second flat output $z_2$, corresponding to the angular position $\vartheta_m$,
   - a module (134) for linearization by dynamic inversion able, from the measured flat output quantity **z,** to calculate the input quantity of the equivalent linear model;
   - a module (136) for estimating an estimated flat output quantity ($\hat{z}$) from the input quantity of the equivalent linear model, based on said equivalent linear model; and
   - a module (138) for computing a residual based on the estimated flat output quantity ($\hat{z}$) and the measured flat output quantity (**z**).

2. The system according to claim 1, **characterized in that** the estimating module implements a SKF observer.

3. The system according to claim 1 or claim 2, wherein the induction motor (120) is of the hybrid stepping type.

4. The system according to claim 3, wherein the input quantity of the equivalent linear model is:

$$v = \begin{pmatrix} \dot{i}_d \\ \dddot{\vartheta}_m \end{pmatrix}$$

   where $\dot{i}_d$ is the first time derivative of the current in the motor expressed in the reference plane dq; and $\dddot{\vartheta}_m$ is the third time derivative of the angular position of the rotor of the motor, and the measured flat output quantity is:

$$z = \begin{pmatrix} i_d \\ \vartheta_m \end{pmatrix}.$$

5. The system according to claim 4, wherein the mechanical and electromagnetic equations of the behavior of the motor (120) make it possible to define the equivalent linear model according to:

$$\begin{pmatrix} z_1 \\ z_2 \end{pmatrix} = \begin{bmatrix} s & 0 \\ 0 & s^3 \end{bmatrix} \begin{pmatrix} v_1 \\ v_2 \end{pmatrix}$$

where s represents the time integration.

6. The system according to any one of claims 1 to 5, wherein the actuation unit further includes a control module (124) able, from a setpoint quantity (C), to generate the input quantity of the actuation unit (120).

7. The system according to any one of claims 1 to 6, **characterized in that** the monitoring pathway further has a diagnostic module (40) using at least one residual as input and capable of generating an inhibition signal (D) of the control pathway (COM).

8. The system according to any one of the preceding claims, wherein, the control pathway is a first control pathway (116) and the monitoring pathway is a first monitoring pathway (118), this latter generating first residuals (R1), the system further comprises a second control pathway (216) associated with a second monitoring pathway (218), capable of making a redundancy of the first control and monitoring pathways, the second monitoring pathway generating second residuals (R2),

the system further including a shared diagnostic module (240), able to inhibit one and/or the other of the first and second control pathways, once a fault is detected, based on the first and second residuals.

9. A method for monitoring a critical system, in particular a critical flight system, of the type including a control pathway (COM) including an actuation unit comprising an induction motor (120) having a nonlinear behavior, that is able to be controlled by applying an input quantity ($u$) and whose state is **characterized by** a measured output quantity y, which is measured by appropriate sensors (122), the measured output quantity y corresponding to currents $i_a$ and $i_b$ in the motor and to the angular position $\vartheta_m$ of the rotor of the motor, **characterized in that**, the behavior of the actuation unit of the system being described by a flat nonlinear model for which there is an equivalent linear model making it possible to go from an input quantity (v) to a flat output quantity ($z, \hat{z}$), the method includes:

   - a step of passing to the reference plane dq, taking the measured output vector $\boldsymbol{y}$ as input, applying the passage matrix (P) on the current $i_a$ and $i_b$ to obtain currents $i_d$ and $i_q$, and outputting a measured flat output quantity $\boldsymbol{z}$, the components of which are a first flat output $z_1$, corresponding to the current $i_d$, and a second flat output $z_2$, corresponding to the angular position $\vartheta_m$,
   - a step of linearization by dynamic inversion able, from the measured flat output quantity $\boldsymbol{z}$, to calculate the input quantity of the equivalent linear model;
   - a step of estimating an estimated flat output quantity ($\hat{\boldsymbol{z}}$) from the input quantity of the equivalent linear model, based on said equivalent linear model;
   - a step of computing a residual based on the estimated flat output quantity ($\hat{\boldsymbol{z}}$) and the measured flat output quantity $\boldsymbol{(z)}$, and
   - a diagnostic step based on the comparison of the or each residual to a threshold value.

FIG.1 art antérieur

## FIG.2

$$\underline{FIG.3}$$

FIG.4 art antérieur

FIG.5 art antérieur

EP 3 072 019 B1

FIG.7

FIG.6

FIG.8 art antérieur

FIG.9 art antérieur

EP 3 072 019 B1

(A)

FIG.10

(A)

FIG.11

EP 3 072 019 B1

(rad)

FIG.12 art antérieur

(rad)

FIG.13 art antérieur

**FIG.14**

**FIG.15**

(A)

FIG.16 art antérieur

(A)

FIG.17 art antérieur

**FIG.19**

**FIG.18**

24

**FIG.20**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Dynamic inversion of a flight critical actuator for fault diagnosis. **A. BOBRINSKOY et al.** 2013 IEEE/AIAA 32ND DIGITAL AVIONICS SYSTEMS CONFERENCE (DASC). IEEE, 05 Octobre 2013

- **A . BOBRINSKOY et al.** Model-based fault détection and isolation design for flight-critical actuators in a harsh environment. *2012 IEEE/AIAA 31 ST DIGITAL AVIONICS SYSTEMS CONFEFiENCE (DASC),* 01 Octobre 2012, 1-17